# EUROPÄISCHE PATENTANMELDUNG

(11) **EP 3 772 723 A1**
(43) Veröffentlichungstag der Anmeldung: **10.02.2021**
(21) Anmeldenummer: 20186248.9
(22) Anmeldetag: 16.07.2020
(51) Int. Cl.: G06T 7/246, G01P 3/38

(54) **VERFAHREN UND SYSTEM ZUR DREHZAHLBESTIMMUNG MITTELS VIDEOKAMERA**

(30) Priorität: 08.08.2019 DE 102019211929
(71) Anmelder: Prüftechnik Dieter Busch GmbH, 85737 Ismaning (DE)
(72) Erfinder: SOMMERER, Cornelius, 81825 München (DE); SHENOY, Bhamy Narasimha, 85399 Halbergmoos (DE); VOTTELER, Frank, 81925 München (DE)

(57) **Zusammenfassung**

Die Erfindung betrifft ein Verfahren zur Bestimmung einer Drehzahl einer drehbar gelagerten Komponente (10) einer Maschine, wobei mittels einer Videokamera (22) Bilddaten eines markanten Bereichs (14) der Maschinenkomponente in Form einer Mehrzahl von Frames gewonnen werden und die Bilddaten ausgewertet werden, um aus der zeitlichen Änderung der Bilddaten des markanten Bereichs in den Frames der Maschinenkomponente die Periodizität der Drehung der Maschinenkomponente zu ermitteln, um die Drehzahl der Maschinenkomponente zu bestimmen. Die Videokamera wird konfiguriert, indem für das Gewinnen der Bilddaten aus der Gesamtzahl der Pixel der Videokamera ein aktiver Bereich (34) ausgewählt wird, in den ein Beobachtungsbereich (36) abgebildet wird, welcher bei der Drehung der Maschinenkomponente von dem markanten Bereich durchlaufen wird, wobei der aktive Bereich nur einen Teil der Gesamtzahl der Pixel der Videokamera umfasst, um die Frame-Rate entsprechend zu erhöhen.

## Beschreibung

Die Erfindung betrifft ein Verfahren und ein System zur Bestimmung der Drehzahl einer drehbar gelagerten Komponente einer Maschine, wie beispielsweise einer Welle.

Es ist grundsätzlich bekannt, Drehzahlen von Maschinenkomponenten auf der Basis von Videoaufnahmen zu ermitteln. So ist beispielsweise in der DE 10 2010 055 533 A1 ein Verfahren unter Verwendung einer CCD-Kamera, beispielsweise eines Mobiltelefons, beschrieben, bei welchem ein mit einer Markierung versehener Bereich einer Welle mit Beleuchtungsblitzen beleuchtet wird, deren Frequenz an die geschätzte Drehzahl angepasst wird. In der CN 206832833 U ist ein Verfahren beschrieben, bei welchem Videobilder einer stroboskopisch beleuchteten Welle aufgenommen werden, aus denen jeweils der aktuelle Drehwinkel der Welle ermittelt wird, um daraus die Drehzahl abzuleiten. Dabei werden Bilder der Stirnseite der Welle aufgenommen, aus denen für die Auswertung ein Bereich extrahiert wird. Ähnliche Verfahren sind in der JP 10078311 A, JP 2012-247209 A, CN 201247072 Y sowie CN 104535787 A beschrieben.

Verfahren, welche die Verwendung von Bildern einer relativ hohen Auflösung erfordern, um eine genaue Bestimmung der jeweiligen Winkelposition der Maschinenkomponente erlauben, sind aufgrund der damit verbunden niedrigen Frame-Raten, nur für relativ niedrige Drehzahlen geeignet.

Es ist Aufgabe der vorliegenden Erfindung, ein Verfahren zur Bestimmung der Drehzahl einer drehbar gelagerten Maschinenkomponente zu schaffen, welches in einem relativ breiten Drehzahlbereich einsetzbar ist. Es ist eine weitere Aufgabe der Erfindung, ein entsprechendes System zu schaffen.

Diese Aufgabe wird erfindungsgemäß gelöst durch ein Verfahren gemäß Anspruch 1 bzw. ein System gemäß Anspruch 15. Dabei wird die Videokamera so konfiguriert, dass für das Gewinnen der Videodaten ein aktiver Bereich des Kameradetektors ausgewählt wird, der einen markanten Bereich der Maschinenkomponente abdeckt, jedoch nur einen relativ kleinen Teil der Gesamtheit der Pixel des Detektors der Videokamera umfasst, um die Frame-Rate entsprechend zu erhöhen, so dass auch die Ermittlung höherer Drehzahlen möglich wird. Diese Lösung ist insbesondere auch zur Integration in System geeignet, in denen ohnehin bereits eine hochauflösende Kamera für andere Zwecke, z.B. zur Wellenausrichtung, vorgesehen ist.

Bevorzugte Ausgestaltungen der Erfindung sind in den abhängigen Ansprüchen angegeben.

Im Folgenden wird die Erfindung anhand der beigefügten Zeichnungen beispielhaft näher erläutert. Dabei zeigen:
- Fig. 1: eine schematische Darstellung eines Beispiels der Verwendung eines Systems zur Ermittlung der Drehzahl einer Maschinenkomponente;
- Fig. 2: eine schematische Darstellung von Komponenten des Systems von Fig. 1;
- Fig. 3: ein Beispiel für die Auswahl eines aktiven Bereichs der Videokamera des Systems von Fig. 1 und 2; und
- Fig. 4: ein Beispiel für den Verlauf der Gesamtintensität der Pixel des aktiven Bereichs als Funktion der Zeit.

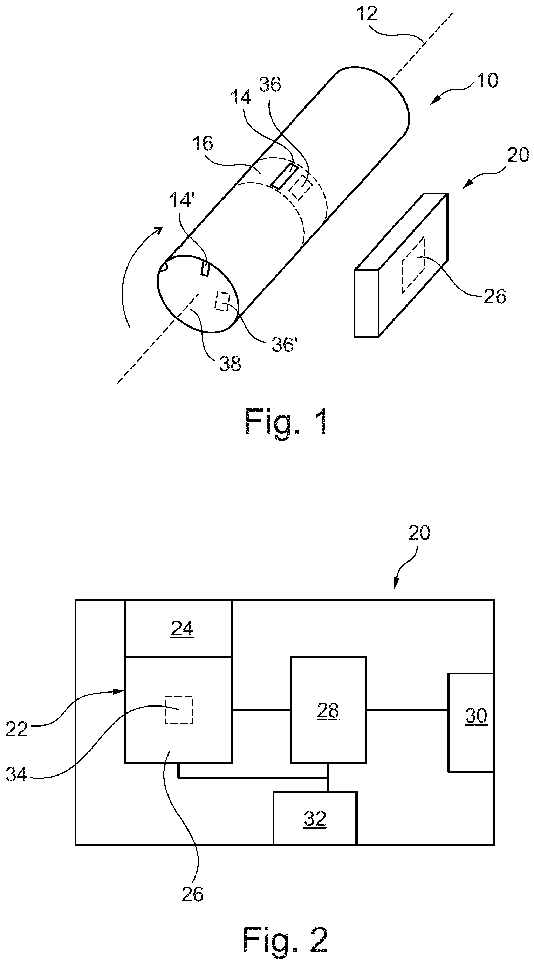

Fign. 1 und 2 zeigen eine schematische Darstellung eines Beispiels eines Systems 20 zur Bestimmung der Drehzahl einer drehbar gelagerten Maschinenkomponente, wie beispielsweise einer Welle 10, die um ihre Längsachse 12 drehbar ist. Die Welle 10 ist auf ihrer Außenfläche mit einer Markierung bzw. Reflexionsmarke 14 versehen, die bei der Drehung der Welle 10 in einem streifenförmigen Bereich 16 umläuft. Das System 20 ist vorzugsweise in einem tragbaren Gerät implementiert, welches beispielsweise in der Art eines Tablet-Computers ausgebildet sein kann. Das System 20 umfasst eine Videokamera 22 mit einer Optik 24 und einem Detektor 26, bei dem es sich vorzugsweise um einen CMOS-Chip oder CCD-Chip handelt, eine Datenverarbeitungseinheit 28 zum Auswerten der von dem Detektor 26 gelieferten Bilddaten, eine Ausgabeeinheit 30 sowie eine als Benutzeroberfläche dienenden Eingabeeinheit 32. Die Ausgabeeinheit 30 und die Eingabeeinheit 32 sind vorzugsweise in Form eines Touchscreens ausgebildet.

Das System 20 ermittelt die Drehzahl der Welle 10, indem mittels der Videokamera 22 die Bewegung eines markanten Bereichs der Welle 10, der im gezeigten Beispiel von der Markierung 14 gebildet wird, verfolgt wird, um die Periodizität der Bewegung des markanten Bereichs zu ermitteln, um daraus die Drehzahl der Welle 10 zu bestimmen. Im gezeigten Beispiel wird zu diesem Zweck der Streifen 16 bzw. ein Bereich 36 desselben von der Kamera 22 überwacht. Dabei nimmt die Videokamera eine Folge von Einzelbildern ("Frames") auf, wobei zwischen zwei Einzelbildern jeweils eine bestimmte Zeitdifferenz liegt, die sich aus der für das Auslesen der relevanten Pixel des Detektors 26 erforderlichen Zeitdauer ergibt. Die für ein Einzelbild erforderliche Auslesedauer hängt dabei von der Auslesegeschwindigkeit pro Pixel (diese kann beispielsweise 10 MHz betragen) und der Gesamtzahl der auszulesenden Pixel ab. Der Kehrwert der Auslesedauer bzw. des Zeitabstands zwischen zwei Einzelbildern wird auch als Frame-Rate bezeichnet. Die Frame-Rate legt wiederum eine Obergrenze für die ermittelbare Drehzahl fest, da zum Ermitteln der Drehzahl die Aufnahme einer bestimmten Anzahl von Einzelbildern pro Umdrehung der Welle erforderlich ist. Je mehr Einzelbilder pro Umdrehung aufgenommen werden, umso höher ist die Genauigkeit der Drehzahlermittlung.

Eine typische Größe von Kamerachips ist 5 Megapixel, beispielsweise in einer Auflösung von 2592 x 1944 Pixel. Das Auslesen einer so großen Pixelzahl würde den Bereich der mit der Kamera zu bestimmenden Drehzahlen auf relativ niedrige Werte begrenzen, was in vielen Anwendungsfällen nicht praktikabel wäre. Dennoch kann die Verwendung eines Detektors 26 mit einer großen Pixelzahl für andere Anwendungen als die Drehzahlermittlung wichtig sein, beispielsweise für Wellenausrichtungsanwendungen.

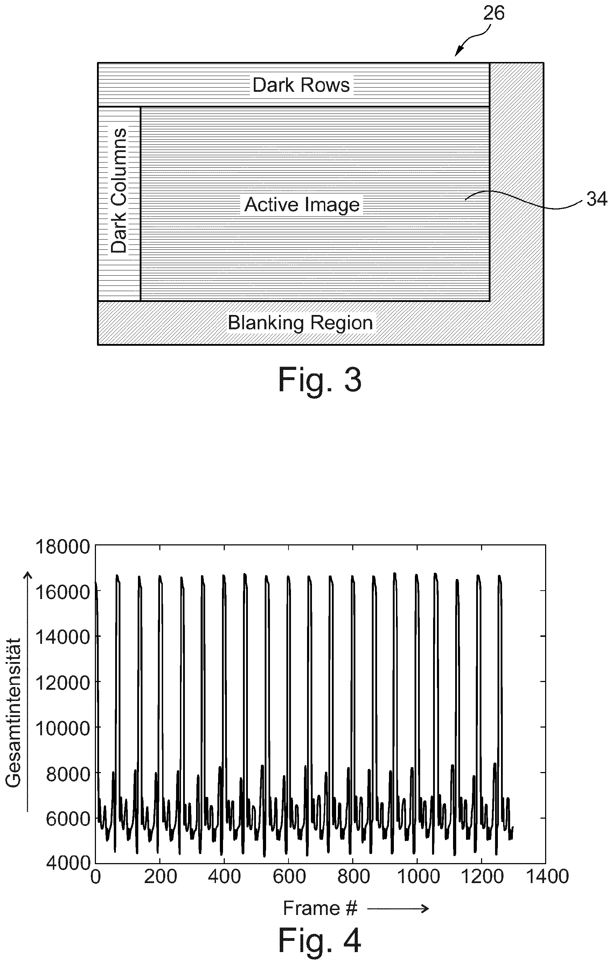

Die vorliegende Erfindung schlägt vor, die Frame-Rate auf für die Drehzahlermittlung praktikable Werte zu erhöhen, indem aus der Gesamtzahl der Pixel des Detektors 20 ein relativ kleiner aktiver Bereich 34 ausgewählt wird (s. Fig. 3), der nur einen relativ geringen Teil der Gesamtzahl der Pixel des Detektors 26 umfasst, jedoch dennoch den markanten Bereich der Welle 10 hinreichend abdeckt. Somit wird nur ein kleiner Teil der Pixel des Detektors 26 tatsächlich ausgelesen, so dass sich die für das Auslesen eines Einzelbilds erforderlichen Zeitdauer entsprechend verkürzt und die Frame-Rate entsprechend erhöht. Der in Fig. 3 "blanking region" dargestellte Bereich wir nicht ausgelesen, wohingegen die als "Dark Rows" bzw. "Dark Columns" dargestellten Bereiche vor dem eigentlichen Bild kommen und grundsätzlich Teil des aktiven Bildes sein können. Diese Bereiche könnte die Elektronik beispielsweise verwenden, wenn einige Taktzyklen zur Synchronisation benötigt werden.

Der aktive Bereich 34 des Detektors 26 kann beispielsweise so gewählt werden, dass auf ihn ein Bereich 36 des Streifens 16 abgebildet wird, der eine kleinere Ausdehnung als die Markierung 14 hat.

Vorzugsweise umfasst der aktive Bereich 34 zwischen 1 und 65536 Pixel, beispielweise 256 Pixel. Der aktive Bereich umfasst dabei vorzugsweisezwischen 1 und 256 Zeilen, beispielsweise 16 Zeilen, und zwischen 1 und 256 Reihen, beispielsweise 16 Reihen. Vorzugsweise beträgt die Zahl der Pixel des aktiven Bereichs 34 zwischen 0,000004% % und 18% der Gesamtzahl der Pixel des Detektors 26, beispielsweise 0,005%. Die Gesamtzahl der Pixel des Detektors 26 beträgt typischerweise zwischen 1M-Pixel und 20M-Pixel Vorzugsweise beträgt die Frame-Rate mindestens das Zweifache, typischerweise mindestens das Vierfache, der zu erfassenden Drehzahl. So sollte die Frame-Rate beispielsweise für die Erfassung einer Drehzahl von 50 Hz vorzugsweise mindestens 200 Hz.

Im einfachsten Fall wird bei der Auswertung der Bilddaten für jedes Einzelbild eine Gesamtintensität der Pixel des aktiven Bereichs 34 ermittelt, d.h. die Einzelwerte der Pixel werden aufsummiert. Die so ermittelte Gesamtintensität der Pixel des aktiven Bereichs 34 kann dann für jedes Bild mit einem Schwellwert verglichen werden, wobei Werte oberhalb des Schwellwerts dem Fall entsprechen, wenn sich die Markierung 14 mindestens zum Teil im beobachteten Bereich 36 befindet. Auf diese Weise kann der Zeitpunkt festgestellt werden, wenn die Markierung 14 in den beobachteten Bereich 36 eintritt: Dies ist dann der Fall, wenn die Gesamtintensität der Pixel des aktiven Bereichs 34 den Schwellwert übersteigt. Auf diese Weise kann ein optischer Triggersensor implementiert werden, wobei die Markierung 14 als Triggermarke dient. Dabei können die Zeitpunkte des Durchlaufs der Markierung 14 durch den beobachteten Bereich 36 festgestellt werden, da jedes Einzelbild einem bestimmten (Aufnahme-) Zeitpunkt entspricht. Die Ordnungszahl des jeweiligen Einzelbilds entspricht somit einer entsprechend zu kalibrierenden Zeitskala.

Auf diese Weise kann in einer etwas komplexeren Auswertung die Gesamtintensität der Pixel des aktiven Bereichs 34 als Funktion der Zeit ausgewertet werden, wobei dann für jedes Einzelbild nicht nur die binäre Information "Gesamtintensität über Schwellwert" bzw. "Gesamtintensität unter Schwellwert" verwendet wird, sondern der tatsächliche Gesamtintensitätswert. Ein Beispiel für eine solche Ermittlung der Gesamtintensität der Pixel des aktiven Bereichs 34 jedes Einzelbilds als Funktion der Zeit ist in Fig. 4 dargestellt, woraus die Periodizität der Umlaufbewegung der Markierung 14 ersichtlich ist. Dabei können die erhaltenen Daten unter Anwendung statistischer Verfahren ausgewertet werden, beispielsweise durch Fitting einer Zielfunktion. Insbesondere kann dabei die Gesamtintensität der Pixel des aktiven Bereichs 34 phasengenau als Funktion der Zeit ausgewertet werden, um ein "Order-Tracking" zu erzielen.

Bei der Auswertung kann auch eine Autokorrelation der Pixel des aktiven Bereichs 34 eingesetzt werden, was insbesondere dann vorteilhaft ist, wenn keine spezielle Markierung 14 verwendet wird. In diesem Fall kann bei der Auswertung die Position einer charakteristischen Struktur bzw. die Anwesenheit einer charakteristischen Struktur im jeweiligen Einzelbild identifiziert werden (was einer Erkennung einer "Marke" im Einzelbild entspricht).

Im einfachsten Fall wird während der Drehzahlmessung die Beleuchtung des markanten Bereichs der Welle 10, das heißt die Beleuchtung im beobachteten Bereich 36, konstant gehalten. Gemäß einer bevorzugten Variante wird der beobachtete Bereich 36 während der Messung mit Beleuchtungsblitzen nach der Art eines Stroboskops beleuchtet, die mit der Frame-Rate der Kamera 22 bzw. mit den Bildaufnahmezeitpunkten synchronisiert sind.

Im einfachsten Fall wird der aktive Bereich von *n* Zeilen und *m* Spalten gebildet, wobei alle in diesem Bereich befindlichen Pixel ausgelesen werden. Bei einer Variante kann ein Teil der in einem solchen Bereich befindlichen Pixel übersprungen werden, um bei vorgegebener Pixelzahl eine höhere Bildabdeckung zu erreichen.

Vorzugsweise ist die Kamera 22 auch während einer laufenden Drehzahlermittlung hinsichtlich der Größe des aktiven Bereichs 34 d/oder der Lage des aktiven Bereichs 34 auf der Fläche des Detektors 26 über die Eingabeeinheit 32 konfigurierbar.

Im in Fig. 1 gezeigten Beispiel nimmt die Kamera 22 die Welle 10 seitlich auf, d.h. aus einer Richtung, die im Wesentlichen senkrecht zu der Drehachse 12 steht. Es sind jedoch auch Anwendungen möglich, in welchen die Kamera 22 die Welle 10 aus einer Richtung aufnimmt, die im Wesentlichen parallel zu der Drehachse 12 ist. Beispielsweise kann die Kamera 22 einen Bereich 36' auf einer Stirnseite 38 der Welle 10 in den aktiven Bereich 34 abbilden, wobei eine Markierung 14' auf der Stirnfläche 38 vorgesehen sein kann, welche bei der Drehung de Welle 10 den Bereich 36 durchläuft.

Es versteht sich, dass die Erfindung nicht nur auf Wellen, sondern auch auf andere drehbar gelagerte Maschinenkomponenten angewendet werden kann.

Die Videokamera 22 kann auch verwendet werden, um die Welle 10 zu visualisieren, beispielsweise in einer Darstellung als dreidimensionales Bild, wobei dann jedoch nicht nur die Pixel des für die Drehzahlerfassung ausgewählten relative kleinen aktiven Bereichs 34 ausgelesen werden, sondern ein größerer Bereich verwendet wird.

Die Erfindung ist besonders geeignet, um die Möglichkeit einer Drehzahlerfassung in ein Messsystem zu integrieren, welches auch andere Messaufgaben wahrnimmt, wobei dann eine höhere Auflösung der Kamera verwendet wird; beispielsweise kann die vorliegende Erfindung bei einem Handgerät zur Wellenausrichtung verwendet werden; solche Geräte werden beispielsweise von der Firma Prüftechnik unter der Bezeichnung "Rotalign Touch" angeboten. Die bei einem solchen Gerät vorgesehene Kamera kann bei voller Auflösung typischerweise etwa 900 Bilder pro Minute aufnehmen, was jedoch für eine Drehzahlermittlung zu langsam ist; für die Erfassung einer Drehzahl von 3000 U/min (50 Hz) werden beispielsweise etwa 1200 Bilder pro Minute (entsprechend einer Frame-Rate von 200 Hz) benötigt. Mit der vorliegenden Erfindung kann der aktive Bereich beispielsweise auf 16x16 Pixel reduziert werden, was dann eine Frame-Rate von 2,2 kHz ermöglicht, wodurch Drehzahlen von 50 Hz und darüber hinaus ermittelt werden können. Grundsätzlich können in der Praxis jedoch Frame-Raten von mehr als 10 kHz erreicht werden, was dann die Ermittlung von Drehzahlen von mehr als 100 Hz erlaubt.

## Patentansprüche

1. Verfahren zur Bestimmung einer Drehzahl einer drehbar gelagerten Komponente (10) einer Maschine, wobei
mittels einer Videokamera (22) Bilddaten eines markanten Bereichs (14) der Maschinenkomponente in Form einer Mehrzahl von Frames gewonnen werden;
die Bilddaten ausgewertet werden, um aus der zeitlichen Änderung der Bilddaten des markanten Bereichs in den Frames der Maschinenkomponente die Periodizität der Drehung der Maschinenkomponente zu ermitteln, um die Drehzahl der Maschinenkomponente zu bestimmen,
wobei die Videokamera konfiguriert wird, indem für das Gewinnen der Bilddaten aus der Gesamtzahl der Pixel der Videokamera ein aktiver Bereich (34) ausgewählt wird, in den ein Beobachtungsbereich (36) abgebildet wird, welcher bei der Drehung der Maschinenkomponente von dem markanten Bereich durchlaufen wird, wobei der aktive Bereich nur einen Teil der Gesamtzahl der Pixel der Videokamera umfasst, um die Frame-Rate entsprechend zu erhöhen.

2. Verfahren gemäß Anspruch 1, **dadurch gekennzeichnet, dass** der aktive Bereich (34) zwischen 0,000004% und 18% der Gesamtzahl der Pixel der Kamera (22) umfasst.

3. Verfahren gemäß Anspruch 1 oder 2, **dadurch gekennzeichnet, dass** der aktive Bereich (34) zwischen 1 und 65536 Pixel umfasst, wobei der aktive Bereich (34) vorzugsweise zwischen 1 und 256 Zeilen und zwischen 1 und 256 Reihen umfasst.

4. Verfahren gemäß einem der vorhergehenden Ansprüche, **dadurch gekennzeichnet, dass** der markante Bereich eine Reflexionsmarke (14) umfasst.

5. Verfahren gemäß einem der vorhergehenden Ansprüche, **dadurch gekennzeichnet, dass** bei der Auswertung eine Gesamtintensität der Pixel des aktiven Bereichs (34) ermittelt wird.

6. Verfahren gemäß Anspruch 5, **dadurch gekennzeichnet, dass** bei der Auswertung die Gesamtintensität der Pixel des aktiven Bereichs (34) mit einem Schwellwert verglichen wird, um den Eintritt des markanten Bereichs in den Beobachtungsbereich (36) zu erfassen.

7. Verfahren gemäß Anspruch 5 oder 6, **dadurch gekennzeichnet, dass** bei der Bestimmung der Drehzahl die Gesamtintensität der Pixel des aktiven Bereichs (34) als Funktion der Zeit auswertet wird.

8. Verfahren gemäß Anspruch 7, **dadurch gekennzeichnet, dass** die Gesamtintensität der Pixel des aktiven Bereichs (34) als Funktion der Zeit phasengenau auswertet wird zwecks "Order-Tracking".

9. Verfahren gemäß einem der vorhergehenden Ansprüche, **dadurch gekennzeichnet, dass** bei der Auswertung eine Autokorrelation der Pixel des aktiven Bereichs (34) ermittelt wird.

10. Verfahren gemäß einem der vorhergehenden Ansprüche, **dadurch gekennzeichnet, dass** bei der Auswertung die Position derselben charakteristischen Struktur im jedem Frame identifiziert wird.

11. Verfahren gemäß einem der vorhergehenden Ansprüche, **dadurch gekennzeichnet, dass** ein Teil der in dem aktiven Bereich (34) befindlichen Pixel übersprungen wird, um die Bildabdeckung bei gegebener Pixelzahl zu erhöhen.

12. Verfahren gemäß einem der vorhergehenden Ansprüche, **dadurch gekennzeichnet, dass** die Kamera (22) während einer laufenden Drehzahlermittlung hinsichtlich der Größe und/oder der Lage des aktiven Bereichs (34) auf der Detektorfläche (26) der Kamera konfigurierbar ist.

13. Verfahren gemäß einem der vorhergehenden Ansprüche, **dadurch gekennzeichnet, dass** die Kamera (22) die Maschinenkomponente (10) aus einer Richtung aufnimmt, die im Wesentlichen senkrecht zu der Drehachse (12) steht, oder die im Wesentlichen parallel zu der Drehachse ist.

14. Verfahren gemäß einem der vorhergehenden Ansprüche, **dadurch gekennzeichnet, dass** die Kamera (22) verwendet wird, um auch Bereiche der Maschinenkomponente (10) außerhalb des markanten Bereichs darzustellen, beispielsweise als dreidimensionales Bild, wobei auch Pixel außerhalb des für die Drehzahlbestimmung ausgewählten aktiven Bereichs (34) ausgelesen werden.

15. System zur Bestimmung einer Drehzahl einer drehbar gelagerten Komponente (10) einer Maschine, mit:
einer Videokamera (22) zum Gewinnen von Bilddaten eines markanten Bereichs (14) der Maschinenkomponente in Form einer Mehrzahl von Frames,
einer Datenverarbeitungseinheit (28) zum Auswerten der Bilddaten, um aus der zeitlichen Änderung der Bilddaten des markanten Bereichs in den Frames der Maschinenkomponente die Periodizität der Drehung der Maschinenkomponente zu ermitteln, um die Drehzahl der Maschinenkomponente zu bestimmen, sowie
einer Ausgabeeinheit (30) zum Ausgeben der Drehzahl der Maschinenkomponente,
wobei die Videokamera so konfiguriert ist, dass für das Gewinnen der Bilddaten aus der Gesamtzahl der Pixel der Videokamera ein aktiver Bereich (34) ausgewählt ist, in den ein Beobachtungsbereich (36) abgebildet wird, welcher bei der Drehung der Maschinenkomponente von dem markanten Bereich durchlaufen wird, wobei der aktive Bereich nur einen Teil der Gesamtzahl der Pixel der Videokamera umfasst, um die Frame-Rate entsprechend zu erhöhen.
